Europäisches Patentamt

European Patent Office

Office européen des brevets

(11) Publication number: **0 205 322**
**B1**

# EUROPEAN PATENT SPECIFICATION

(45) Date of publication of patent specification: **16.08.90**

(51) Int. Cl.⁵: **B 60 K 41/24, B 60 K 41/02**

(21) Application number: **86304339.4**

(22) Date of filing: **06.06.86**

(54) Method and apparatus for controlling an automatic clutch.

(30) Priority: **10.06.85 JP 125815/85**
**11.06.85 JP 126876/85**

(43) Date of publication of application:
**17.12.86 Bulletin 86/51**

(45) Publication of the grant of the patent:
**16.08.90 Bulletin 90/33**

(84) Designated Contracting States:
**DE FR GB SE**

(56) References cited:
**EP-A-0 131 411**
**DE-A-2 656 888**
**DE-A-3 208 715**
**DE-A-3 447 676**
**DE-B-1 188 955**
**DE-B-2 415 954**
**US-A-4 363 389**

**PATENT ABSTRACTS OF JAPAN, unexamined
applications, M field, vol. 9, no. 124, May 29,
1985, THE PATENT OFFICE JAPANESE
GOVERNMENT, page 58 M 383**

(73) Proprietor: **Isuzu Motors Limited**
**6-22-10 Minamiooi Shinagawa-ku
Tokyo 140 (JP)**

(72) Inventor: **Yoshimura, Hiroshi
24-25, Kamoi 2-chome Midori-ku
Yokohama-shi Kanagawa 226 (JP)**
Inventor: **Ohkawa, Akira
12-2, Kaminagaya-cho 4-chome Konan-ku
Yokohama-shi Kanagawa (JP)**

(74) Representative: **Brunner, Michael John et al
GILL JENNINGS & EVERY 53-64 Chancery Lane
London WC2A 1HN (GB)**

## Description

This invention relates to a method of, and apparatus for, controlling an automatic clutch disposed between the engine and the gear transmission of a motor vehicle such as an automobile, and more particularly to a method of, and apparatus for, controlling a motor vehicle clutch so that the clutch can be quickly disengaged to prevent the engine from being stalled when the brake pedal of the vehicle is depressed.

As is well known in the art, clutches are employed in motor vehicles for selectively transmitting engine power to the driving wheels of the vehicle. With recent progress in electronic technology, there has been developed an automatic control system for automatically controlling the clutch and the gear transmission of a motor vehicle. In particular, the clutch and the gear transmission, which comprises gears on parallel shafts, are driven respectively by hydraulic actuators.

The automatic control system includes an automatic clutch control apparatus which controls clutch engagement and disengagement by driving a clutch actuator comprising a cylinder and a piston for operating a clutch control member. The automatic clutch control apparatus comprises an electronic control unit in the form of a microcomputer for driving the clutch actuator in dependence upon operating conditions of the motor vehicle, such as the speed of rotation of the engine, or the accelerator pedal position.

More specifically, the electronic control unit of the automatic clutch control apparatus is arranged to compute, at all times, the extent to which the clutch is to be engaged, from a signal indicating the engine rotation speed and a signal indicating the accelerator pedal position, and hence to determine the position into which the clutch actuator is to be operated. When the motor vehicle is starting, the electronic control unit determines the position into which the clutch is to be operated, on the basis of the depth to which the accelerator pedal has been depressed and the engine rotation speed, which depth and speed vary from time to time. The electronic control unit thus drives the clutch actuator to move the clutch control member progressively from a clutch-disengaging position through a partly-engaging position to a clutch-engaging position, so that the motor vehicle starts to move smoothly. The clutch is also controlled by the electronic control unit when the gears of the gear transmission are shifted during travel of the motor vehicle.

When the motor vehicle is at rest, the automatic clutch control apparatus disengages the clutch to ensure that the engine does not stall, but will idle even through the wheels of the motor vehicle do not rotate. While the motor vehicle is running at an extremely low speed, the electronic control unit controls the clutch so that it is partly engaged, to prevent the motor vehicle from being jolted due to the lack of sufficient torque. When the engine speed or the motor vehicle road speed drops below a preset level, the clutch is disconnected to prevent the engine from stalling suddenly when the brake pedal is depressed.

A clutch control system has been previously proposed in which deceleration of the input shaft of the gear transmission, rather than the engine speed or the motor vehicle road speed, is detected, and the clutch is disengaged when the input shaft deceleration is abruptly lowered (see Japanese Laid-Open Patent Publication No. 60-8553). In this proposed clutch control system, which is shown in Fig. 7 of the drawings accompanying the present application, the speed of rotation of an engine 101 (or the speed of rotation, measured by a sensor 104, of an input shaft 105 of a synchromesh gear transmission 103 to which engine power is transmitted via a clutch 102) is progressively reduced, or the deceleration (i.e. the rate of reduction of the speed of rotation of the input shaft per unit time) of the engine is progressively increased after the brake pedal has been depressed, and the deceleration reflects the extent to which the brake pedal is depressed. Based on these characteristics, the clutch is disengaged when the deceleration is greater than a preset level. Rotative drive power from the gear transmission 103 is transmitted through its output shaft 106 and a differential gear 107 to driving wheels 108 of the motor vehicle. If the driver abruptly brakes the motor vehicle, the clutch is disconnected at an earlier stage to prevent the engine from being stopped, since the input shaft 105 reaches a deceleration limit more quickly than when the motor vehicle is braked normally.

The former conventional clutch control system is effective when the motor vehicle is decelerated slowly, but fails to disengage the clutch quickly enough when the motor vehicle is rapidly decelerated, thereby resulting in stalling of the engine. More specifically, if the accelerator pedal is released and the brake pedal is depressed relatively slowly, the engine will not be stalled, because the clutch is disengaged upon detection of the engine speed being lowered to the preset level (500 rpm). However, if the brake pedal is abruptly depressed to brake the motor vehicle quickly, or if the wheel tyres slip on a slippery road, such as a snow-covered road, and the wheels are locked by being braked, it takes a relatively long time for the electronic control unit to detect a reduction in the speed of the engine, and the speed of the motor vehicle, down to the preset level. It therefore takes a relatively long time to get the clutch completely disengaged, during which time the engine speed is quickly lowered since the braking operation is quick, with the result that the engine will stall before the clutch is disengaged.

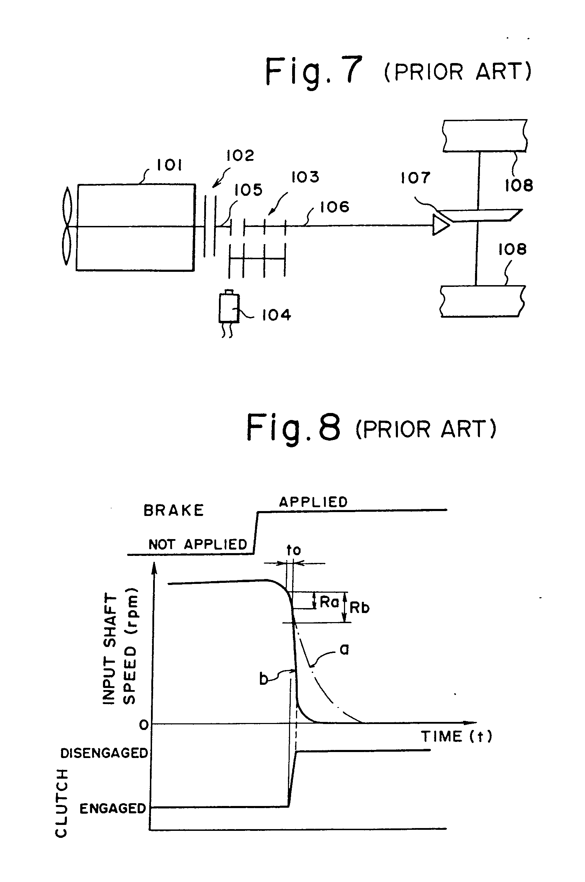

With the latter clutch control arrangement, it is shown in Fig. 8 of the accompanying drawings that the reduction in the speed of rotation of the input shaft per unit time $(t_0)$ is detected when the brake pedal is depressed, and the clutch is quickly disconnected to prevent the engine from stalling when the detected reduction rate is higher than a preset level. When the motor vehicle runs on an ordinary road and is braked, the input shaft speed is lowered as shown by the curve a, and the reduction rate Ra is lower than the preset level. This means that the input shaft speed is reduced relatively gradually, and the clutch is disengaged while the engine is in operation. Since the input shaft speed is not lowered substantially to zero within the time period required until the clutch is disconnected in reality after the control system starts its operation, the engine is prevented from being stopped. When the motor vehicle travels over a slippery road, such as a snow-covered road, with a low coefficient of friction, the wheels are apt to be locked easily when braked, causing the input shaft speed to be decreased abruptly, so that its speed reduction rate or deceleration Rb becomes higher than the preset level. Because the time required for the input shaft to be stopped at such deceleration Rb is shorter than the time for the clutch to be completely disengaged, the engine has already stalled by the time the clutch is disengaged.

DE-B-1188955 discloses a system in which, when the force exerted by the fluid in the braking system on the piston of a control valve is greater than the force exerted by a spring in the opposite direction, a valve is shifted to cause disengagement of the clutch. A centrifugal actuator detects the speed of rotation of the engine and both the magnitude of the braking force and the engine speed are used in determining whether the clutch is to be disengaged.

US-A-4363389 discloses a similar system, wherein operation to disengage the clutch occurs when the braking system is actuated and the vehicle speed is reduced to a predetermined level with the accelerator in idle position.

An object of the present invention is to provide a method of and an apparatus for controlling an automatic clutch on a motor vehicle so that the engine of the motor vehicle will not be stalled, even when the brake pedal thereof is quickly depressed.

According to the invention, there is provided apparatus for controlling the operation of a clutch of a motor vehicle having an engine; a gear transmission, disengagement of the clutch disconnecting the gear transmission from the engine; a braking system; means for detecting a braking force applied to the braking system, and for determining whether the magnitude of a parameter of the braking force is greater than a predetermined level; and means to cause disengagement of the clutch on the basis of said determination, characterised in that the parameter of the braking force is the rate of increase of the braking force.

The invention also includes a method of controlling the operation of a clutch of a motor vehicle having an engine, a gear transmission and a braking system whereby disengagement of the clutch disconnects the gear transmission from the engine; and wherein a braking force applied to the braking system is deleted; it is determined whether the magnitude of a parameter of the braking force is greater than a predetermined level, and the clutch is disengaged on the basis of said determination, characterised in that parameter of the braking force is the rate of increase of the braking force.

When the braking force is detected upon depression of the brake pedal, thespeed of rotation of the engine, or the speed at which the brake pedal is depressed, is detected. Whether the clutch is to be quickly disengaged is ascertained on the basis of a combination of the detected braking force and the speed of rotation of the engine or the speed of depression of the brake pedal, so that the engine will be prevented from being stalled due to the depression of the brake pedal.

Heretofore, the clutch has been disengaged by detecting when the speed of rotation of the engine or the speed of travel of the motor vehicle is lowered below a preset level, by detecting when the rate of reduction or deceleration of the speed of rotation of an input shaft is increased above a preset level or by monitoring the brake pressure. By use of the present invention, however, the clutch is quickly disconnected by detecting an increase in the rate of increase of the braking force or the braking speed, and detecting when such increase exceeds a preset level, thus preventing the engine from being stalled when the motor vehicle is braked.

An embodiment of the invention will now be described, by way of example, with reference to the accompanying drawings in which:

Fig. 1 is a schematic diagram of a clutch control apparatus according to an embodiment of the present invention;

Fig. 2 is a graph showing the relationship between braking air pressure and braking force;

Fig. 3 is a graph, similar to Fig. 2, for explaining preset pressures for air pressure switches in an embodiment of the present invention;

Fig. 4 is a schematic view showing air pressure switches for detecting the air pressure of the brake air value in the embodiment of Fig. 3;

Fig. 5 is a timing chart of operation of the air pressure switches illustrated in Fig. 4;

Fig. 6 is a flowchart of a method according to the embodiment of Fig. 3;

Fig. 7 is a schematic view showing a conventional motor vehicle gear transmission in which a clutch is disengaged by detecting the deceleration of an input shaft, as described above; and,

Fig. 8 is a timing chart showing the deceleration of the input shaft of Fig. 7 in relation to brake and clutch operation.

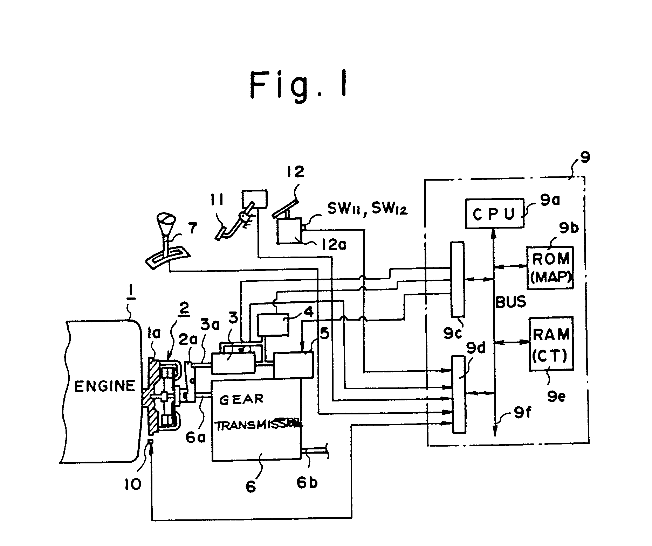

As shown in Fig. 1, clutch control apparatus according to the present invention is used in combination with a motor vehicle having a petrol (gasoline) engine 1 including a throttle valve (not shown) for controlling the amount of an intake medium (such as air or an air-fuel mixture), the engine 1 having a flywheel 1a coupled to its crankshaft. The engine 1 is not limited to a petrol engine, but may be a diesel engine. The flywheel 1a is coupled to a clutch 2 of the known dry single-plate type of design having a release lever 2a. A hydraulically-operated clutch actuator 3, having a cylinder and a piston, includes a plurality of solenoid-operated valves for its control. To control the extent to which the clutch 2 is to be engaged, the solenoid-operated valves are selectively opened and closed to move the piston for enabling a piston rod 3a to drive the release lever 2a. The clutch actuator 3 is supplied with hydraulic pressure from a hydraulic pressure mechanism 4. A gear transmission actuator assembly 5 includes an actuator for shifting gears and an actuator for selecting gears. A gear transmission 6 comprises gears on parallel shafts and is operated by the gear transmission actuator assembly 5 for changing the gears. The gear transmission 6 has an input shaft 6a coupled to the clutch 2, and an output (drive) shaft 6b. A selector lever 7, which is operated by the driver, has an "N" setting (neutral position), a "D" setting (automatic gear shift), a "1" setting (first gear position), a "2" setting (second gear position), a "3" setting (automatic gear shift between first, second and third gear positions), and an "R" setting (reverse gear position). These settings can be selected by the position of the lever. Position signals from the selector lever 7 are read into an electronic control unit, which will be described later. The selector lever 7 is generally movable in and along a straight slot, as shown, for selecting the settings, or may be movable in an H-shaped gate for selecting the settings.

The flywheel 1a has a plurality of teeth equally-spaced around its periphery. An engine rotation sensor 10 is disposed adjacent the flywheel 1a for detecting the speed of rotation of the engine 1 from the number of flywheel teeth passing the sensor 10 per unit time. An electronic control unit 9 includes a processor (CPU) 9a for effecting arithmetic operations, a read-only memory (ROM) 9b for storing a control program for controlling the gear transmission 6, a control program for controlling the clutch 5 and data such as a control map, an output port 9c, an input port 9d, a random-access memory (RAM) 9e for storing the results of the arithmetic operations and other data, and an address data bus (BUS) 9f interconnecting the processor 9a, the ROM 9b, the output port 9c, the input port 9d, and the RAM 9e. The output port 9c is connected to the clutch actuator 3, the hydraulic pressure mechanism 4 and the gear transmission actuator 5, and issues signals for driving these actuators and mechanism.

The input port 9d is connected to the engine rotation sensor 10, the selector lever 7, an accelerator pedal 11, and a brake pedal 12 for receiving detected signals from the sensor, lever, and pedals. The depth to which the accelerator pedal 11 is depressed is read into the electronic control unit 9 through the input port 9d. The brake pedal 12 is associated with a brake fluid valve 12a and, when depressed, operates the valve 12a for supplying a brake with a braking fluid pressure commensurate with the depth to which the brake pedal 12 is depressed.

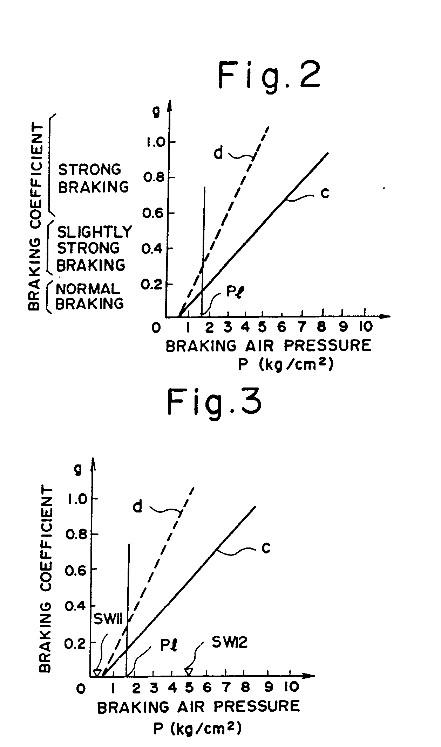

The principles of the present invention will be described with reference to Fig. 2. The graph of Fig. 2 is drawn by plotting braking coefficient g (on the vertical axis) against braking air pressure P (kg/cm²) (on the horizontal axis) determined by the depth to which the brake pedal 12 is depressed, for the condition in which the motor vehicle carries a large load (line c) and the condition in which the motor vehicle carries no load (line d). A point PP on the horizontal axis indicates the braking air pressure at which the wheels of the motor vehicle lock, when on a road having a small coefficient of friction with respect to the wheels, such as a snow-covered road.

As can be understood from Fig. 2, the braking coefficient g, i.e. the braking force, can be divided into three modes or stages: a "normal braking" mode, a "slightly strong braking" mode and a "strong braking" mode. If the brake pedal 12 is quickly and deeply depressed by the driver, the brake air valve 12a is opened to a large extent to apply a large braking force to the brake in the strong braking mode. If the clutch is immediately disengaged in this condition to prevent the engine from being stalled, no problem occurs, irrespective of whether the motor vehicle carries a large load or no load. In the slightly strong mode or the normal mode, if the clutch were disconnected to prevent the engine from being stalled on a road with a low coefficient of friction with respect to the wheels, the clutch would always become disconnected each time the brake is depressed while the motor vehicle is running on an ordinary road with a normal coefficient of friction.

In this example, the clutch 2 can be disengaged smoothly to prevent the engine 1 from being stopped when the brake pedal 12 is quickly and deeply depressed by the driver, such as in an emergency. This embodiment will be described below with reference to Figs. 3-6.

Fig. 3 is a graph showing braking coefficient g (on the vertical axis) plotted against braking air pressure P (kg/cm²) (on the horizontal axis) determined by the depth to which the brake pedal 12 is depressed, for a light (lightly loaded) motor vehicle (line c) and a heavy (heavily loaded) motor vehicle (line d). A point PP on the horizontal axis indicates a braking air pressure at which the wheels of the motor vehicle lock on a road having a small coefficient of friction with respect to the wheels.

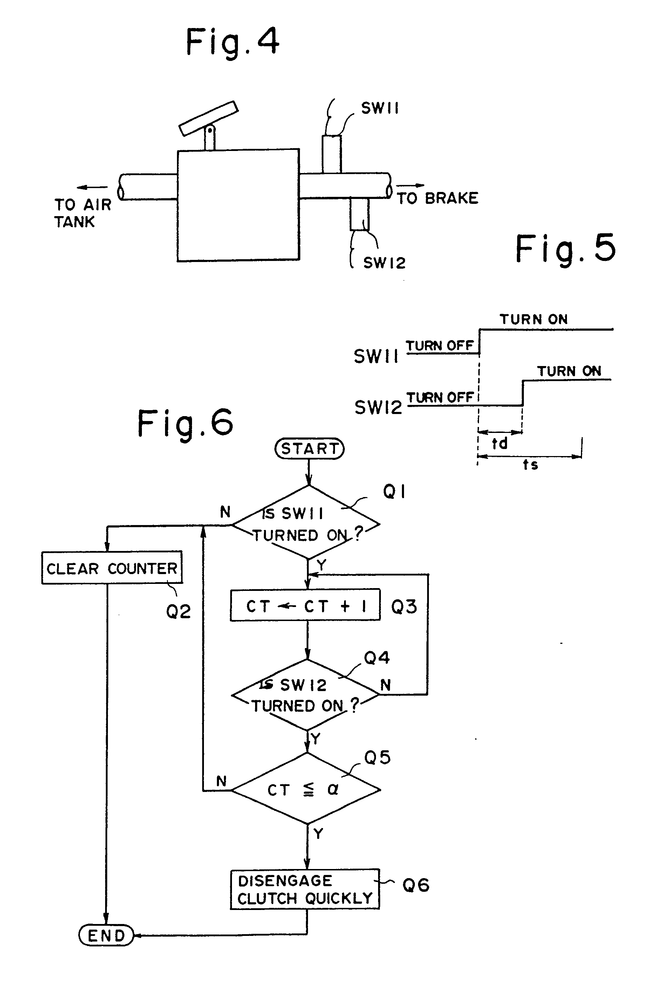

As shown in Fig. 3, the braking force is proportional to the braking air pressure. As illustrated in Fig. 4, two air pressure switches SW11 and SW12 are associated with the output passage of the brake air valve 12a which is connected to the brake. If the time difference td between turn-on times of these switches SW11, SW12 is shorter than a preset value ts as shown in Fig. 5, it is determined that the braking action is panic braking, in which the rate of increase in the braking force is large, and the clutch 2 is quickly disconnected. The air pressures at which the air pressure switches SW11, SW12 are turned on may be selected as follows:

SW11: 0.3 (kg/cm$^2$)
SW12: 5.0 (kg/cm$^2$)

i.e. on opposite sides of the air pressure PP.

The air pressure setting (5.0kg/cm$^2$) for the switch SW12 is high enough to produce a sufficient braking pressure irrespective of the total weight of the motor vehicle, as shown in Fig. 3.

The sequence of operations for disengaging the clutch according to this embodiment will now be described with reference to Figs. 1, 5 and 6. Under ordinary driving conditions in which the brake pedal 11 is not depressed by the driver, the air pressure switch SW11 is turned off. The program goes from a step Q1 to a step Q2 in which a counter in the electronic control unit 9 is cleared to zero, and then leaves the flowchart of Fig. 6.

If the brake pedal 12 is depressed by the driver, and the air pressure switch SW11 is turned on in the step Q1, a signal from the switch SW11 is applied via the input port 9d and the BUS 9f to the CPU 9a. The CPU 9a then increments the count in the counter by + 1, and stores the count in a counter area CT in the RAM 9e in a step Q3. Thereafter, the program proceeds to a step Q4 which ascertains whether or not the air pressure switch SW12 is turned on. If the switch SW12 is turned off, the program goes back to the step Q3 so that the counting operation of the counter and the count storing operation are repeated. During this time, the brake pedal 12 is continuously depressed or more deeply depressed by the driver, and the braking air pressure P continues to increase.

When the braking air pressure P becomes high enough to turn on the air pressure switch SW12, the program goes from the step Q4 to a step Q5, which compares the count CT of the counter with a constant value a, stored in the RAM 9e in the electronic control unit 9, i.e. a constant used for determined whether the braking is quick braking (particularly panic braking) when the brake pedal 12 is depressed. If the count is greater than the constant a, then it is determined that the brake pedal 12 is slowly depressed, and it is therefore not necessary to disengage the clutch 2. Therefore, the program returns to the step Q2 in which the count of the counter is cleared to zero. This means that td > ts in Fig. 5.

If the count is equal to or smaller than the constant a, then the time difference between the turn-on times of the air pressure switches SW11, SW12 is equal to or shorter than the preset time ts, and hence it is determined that the braking action is panic braking. Immediately thereafter, the CPU 9a applies a clutch release signal through the output port 9c to the clutch actuator 3 to disengage the clutch 2 quickly in a step Q6.

Instead of programming the above operation sequence in the ROM 9b in the electronic control unit 9, or using the microcomputer hardware, discrete circuits or mechanisms may be employed for comparing the time difference td with the preset time ts, and/or for executing the various processing steps described above, as can readily occur to those skilled in the art.

In the above embodiment, the brake is operated by air pressure. However, the above clutch control may alternatively be effected by providing a hydraulic brake cylinder operable by the brake pedal, and associating pressure switches and a pressure sensor with the hydraulic brake cylinder, as can also readily occur to those skilled in the art.

By use of the present invention, as described above, the engine is prevented from being stalled when the brake pedal is depressed while the motor vehicle is running on an ordinary road or even on a road, such as a snow-covered road, having a low coefficient of friction with respect to the vehicle wheels.

**Claims**

1. Apparatus for controlling the operation of a clutch (2) of a motor vehicle having an engine (1); a gear transmission (6), disengagement of the clutch disconnecting the gear transmission from the engine; a braking system (12, 12a); means (SW11, SW12, 9) for detecting a braking force applied to the braking system, and for determining whether the magnitude of a parameter of the braking force is greater than a predetermined level; and means (3, 3a, 4) to cause disengagement of the clutch on the basis of said determination, characterised in that the parameter of the braking force is the rate of increase of the braking force.

2. Apparatus according to claim 1, characterised in that there is provided means (10) for detecting the speed of rotation of the engine; and in that both the magnitude of the rate of increase of the braking force and the engine speed are used in determining whether the clutch is to be disengaged.

3. Apparatus according to claim 1 or claim 2, characterised in that the braking force detecting means (SW11, SW12) comprises means for detecting a braking fluid pressure.

4. Apparatus according to claim 3, characterised in that the means for detecting braking fluid pressure (SW11, SW12) comprises means for detecting braking air pressure.

5. Apparatus according to claim 3, characterised in that the means for detecting braking fluid pressure comprises means for detecting braking hydraulic pressure.

6. Apparatus according to any one of claims 3, 4 or 5, characterised in that the means for detecting the braking fluid pressure comprises a fluid pressure switch (SW11, SW12).

7. Apparatus according to any one of claims 3, 4 or 5, characterised in that the means for detecting the braking fluid pressure comprises a fluid pressure sensor.

8. Apparatus according to any of claims 1 to 7, characterised in that the rate detecting means comprises means for detecting the rate at which a braking fluid pressure is increased.

9. Apparatus according to any of claims 1 to 8, characterised in that the braking force detecting means comprises at least two fluid pressure switches (SW11, SW12) which can be turned on under respective braking fluid pressures above and below a braking fluid pressure level at which wheels of the motor vehicle lock, the rate detecting means comprising means for detecting when the time difference between the turn-on times of the fluid pressure switches from the time at which the brake is applied is shorter than a preset time.

10. Apparatus according to any of the preceding claims, characterised by a control unit (9) to which a signal representing the rate of increase of the braking force and a signal representing engine speed are fed, and which includes means to store reference data for comparison with said rate of increase and said engine speed to determine whether disengagement of the clutch should be effected.

11. A method of controlling the operation of a clutch (2) of a motor vehicle having an engine (1), a gear transmission (6) and a braking system (12, 12a) whereby disengagement of the clutch disconnects the gear transmission from the engine; and wherein a braking force applied to the braking system is detected; it is determined whether the magnitude of a parameter of the braking force is greater than a predetermined level, and the clutch is disengaged on the basis of the determination, characterised in that the parameter of the braking force is the rate of increase of the braking force.

12. A method according to claim 11, characterised by detecting the speed of rotation of the engine (1); determining whether the clutch (2) is to be disengaged on the basis of both the rate of increase of the braking force and the detected speed of rotation of the engine; and disengaging the clutch (2) on the basis of said determination.

**Patentansprüche**

1. Vorrichtung zur Steuerung der Betätigung einer Kupplung (2) eines Kraftfahrzeuges, das einen Motor (1) und ein Getriebe (6) aufweist, wobei das Trennen der Kupplung das Getriebe von dem Motor, trennt sowie ein Bremssystem (12, 12a), Mittel (SW11, SW12, 9) zum Erfassen einer auf das Bremssystem aufgegebenen Bremskraft und zur Feststellung, ob die Größe eines Parameters der Bremskraft größer ist als ein vorgegebenes Niveau, und Mittel (3, 3a, 4) zum Bewirken der Trennung der Kupplung auf der Grundlage der genannten Feststellung, dadurch gekennzeichnet, daß der Parameter der Bremskraft die Zunahmerate der Bremskraft ist.

2. Vorrichtung nach Anspruch 1, dadurch gekennzeichnet, daß Mittel (10) zur Erfassung der Drehgeschwindigkeit des Motors vorgesehen sind, und daß sowohl die Größe der Zunahmerate der Bremskraft als auch die Motordrehzahl bei der Feststellung benutzt werden, ob die Kupplung zu trennen ist.

3. Vorrichtung nach Anspruch 1 oder 2, dadurch gekennzeichnet, daß die Bremskrafterfassungsmittel (SW11, SW12) Mittel zur Erfassung eines Bremsflüssigkeitsdruckes einschließen.

4. Vorrichtung nach Anspruch 3, dadurch gekennzeichnet, daß die Mittel zur Erfassung des Bremsflüssigkeitsdruckes (SW11, SW12) Mittel zur Erfassung eines Bremsluftdruckes einschließen.

5. Vorrichtung nach Anspruch 3, dadurch gekennzeichnet, daß die Mittel zur Erfassung des Bremsflüssigkeitsdruckes Mittel zur Erfassung eines hydraulischen Bremsdruckes einschließen.

6. Vorrichtung nach einem der Ansprüche 3, 4 oder 5, dadurch gekennzeichnet, daß die Mittel zur Erfassung des Bremsflüssigkeitsdruckes einen Flüssigkeitsdruckschalter (SW11, SW12) umfassen.

7. Vorrichtung nach einem der Ansprüche 3, 4 oder 5, dadurch gekennzeichnet, daß die Mittel zur Erfassung des Bremsflüssigkeitsdruckes einen Flüssigkeitsdrucksensor umfassen.

8. Vorrichtung nach einem der Ansprüche 1 bis 7, dadurch gekennzeichnet, daß die Mittel zur Erfassung der Zunahmerate Mittel zur Erfassung der Rate einschließen, zu der ein Bremsflüssigkeitsdruck erhöht wird.

9. Vorrichtung nach einem der Ansprüche 1 bis 8, dadurch gekennzeichnet, daß die Mittel zur Erfassung der Bremskraft mindestens zwei Flüssigkeitsdruckschalter (SW11, SW12) umfassen, die auf entsprechende Bremsflüssigkeitsdrücke über und unter ein Bremsflüssigkeits-Druckniveau verstellbar sind, bei dem Räder des Kraftfahrzeuges blockieren, wobei die Mittel zur Erfassung der Zunahmerate Mittel zur Erfassung umfassen, wann die Zeitdifferenz zwischen den Stellzeiten der Flüssigkeitsdruckschalter von dem Zeitpunkt an, zu dem die Bremse betätigt wird, kürzer ist als eine vorgegebene Zeitspanne.

10. Vorrichtung nach einem der vorhergehenden Ansprüche, gekennzeichnet durch eine Steuereinheit (9), zu der ein Signal, das die Zunahmerate der Bremskraft sowie ein Signal geführt wird, das die Motordrehzahl repräsentiert, und die Mittel einschließt, um Referenzwerte zum Vergleich mit der genannten Zunahmerate und der Motordrehzahl zu speichern, um festzustellen, ob das Trennen der Kupplung durchgeführt werden soll.

11. Verfahren zur Steuerung der Betätigung einer Kupplung (2) eines Kraftfahrzeuges, das einen Motor (1), ein Getriebe (6) und ein Bremssystem (12, 12a) aufweist, wobei das Trennen der Kupplung das Getriebe von dem Motor trennt und wobei eine Bremskraft, die auf das Bremssystem aufgegeben wird, erfaßt wird; es wird festgestellt, ob die Größe eines Parameters der Bremskraft größer ist als ein vorgegebenes Niveau und die Kupplung wird auf der Basis dieser Feststellung getrennt, dadurch gekennzeichnet, daß der Parameter der Bremskraft die Zunahmerate der Bremskraft ist.

12. Verfahren nach Anspruch 11, gekennzeichnet durch eine Erfassung der Drehgeschwindigkeit des Motors (1), wodurch erfaßt wird, ob die

Kupplung (2) auf der Basis sowohl der Zunahmerate der Bremskraft als auch der festgestellten Drehgeschwindigkeit des Motors getrennt werden soll, und durch das Trennen der Kupplung (2) auf der Basis besagter Feststellung.

**Revendications**

1. Appareil de commande de la manoeuvre d'un embrayage (2) d'un véhicule à moteur ayant un moteur (1), une transmission (6), le débrayage de l'embrayage séparant la transmission du moteur, un circuit de freinage (12, 12a), un dispositif (SW11, SW12, 9) destiné à détecter une force de freinage appliquée au circuit de freinage et à déterminer si l'amplitude d'un paramètre de la force de freinage dépasse un niveau prédéterminé, et un dispositif (3, 3a, 4) destiné à provoquer le débrayage de l'embrayage en fonction de cette détermination, caractérisé en ce que le paramètre de la force de freinage est la vitesse d'augmentation de la force de freinage.

2. Appareil selon la revendication 1, caractérisé en ce qu'il comporte un dispositif (10) de détection de la vitesse de rotation du moteur, et en ce que l'amplitude de la vitesse d'augmentation de la force de freinage et la vitesse du moteur sont utilisées pour la détermination du fait que l'embrayage doit être débrayé.

3. Appareil selon la revendication 1 ou 2, caractérisé en ce que le dispositif de détection de la force de freinage (SW11, SW12) comporte un dispositif de détection d'une pression d'un fluide de freinage.

4. Appareil selon la revendication 3, caractérisé en ce que le dispositif de détection d'une pression d'un fluide de freinage (SW11, SW12) comporte un dispositif de détection d'une pression pneumatique de freinage.

5. Appareil selon la revendication 3, caractérisé en ce que le dispositif de détection d'une pression de fluide de freinage comporte un dispositif destiné à détecter une pression hydraulique de freinage.

6. Appareil selon l'une quelconque des revendications 3, 4 et 5, caractérisé en ce que le dispositif de détection de la pression d'un fluide de freinage comporte un interrupteur sensible à la pression du fluide (SW11, SW12).

7. Appareil selon l'une quelconque des revendications 3, 4 et 5, caractérisé en ce que le dispositif de détection de la pression d'un fluide de freinage comporte un capteur de pression de fluide.

8. Appareil selon l'une quelconque des revendications 1 à 7, caractérisé en ce que le dispositif de détection de vitesse comporte un dispositif de détection de la vitesse à laquelle la pression du fluide de freinage augmente.

9. Appareil selon l'une quelconque des revendications 1 à 8, caractérisé en ce que le dispositif de détection de la force de freinage comporte au moins deux interrupteurs (SW11, SW12) commandés par la pression d'un fluide et qui peuvent être fermés par des pressions respectives de fluide de freinage qui sont supérieure et inférieure à un niveau de pression de fluide de freinage auquel les roues du véhicule à moteur se bloquent, le dispositif de détection de vitesse comprenant un dispositif destiné à détecter le moment où la différence de temps entre les moments de fermeture des interrupteurs de pression de fluide, après le serrage du frein, est inférieure à un temps préréglé.

10. Appareil selon l'une quelconque des revendications précédentes, caractérisé par une unité de commande (9) à laquelle sont transmis un signal représentant la vitesse d'augmentation de la force de freinage et un signal représentant la vitesse du moteur, et qui comporte un dispositif destiné à conserver des données de référence destinées à être comparées à la vitesse d'augmentation et à la vitesse du moteur afin que le fait que le débrayage de l'embrayage doive être effectué soit déterminé.

11. Procédé de commande de fonctionnement d'un embrayage (2) d'un véhicule à moteur ayant un moteur (1), une transmission (6) et un circuit de freinage (12, 12a), le débrayage de l'embrayage séparant la transmission du moteur, et dans lequel une force de freinage appliquée au circuit de freinage est détectée, le procédé comprenant la détermination du fait que l'amplitude d'un paramètre de la force de freinage est supérieure à un niveau prédéterminé, et le débrayage de l'embrayage en fonction de cette détermination, le procédé étant caractérisé en ce que le paramètre de la force de freinage est la vitesse d'augmentation de la force de freinage.

12. Procédé selon la revendication 11, caractérisé par la détection de la vitesse de rotation du moteur (1), la détermination du fait que l'embrayage (2) doit être débrayé en fonction à la fois de la vitesse d'augmentation de la force de freinage et dela vitesse détectée de rotation du moteur, et le débrayage de l'embrayage (2) en fonction de cette détermination.

# Fig. 1

# Fig.2

# Fig.3

# Fig.4

TO AIR TANK

SW11

TO BRAKE

SW12

# Fig.5

SW11  TURN OFF  TURN ON

SW12  TURN OFF  TURN ON

td

ts

# Fig.6

START

Q1  IS SW11 TURNED ON ?  N / Y

CLEAR COUNTER  Q2

CT ← CT + 1  Q3

Q4  IS SW12 TURNED ON ?  N / Y

Q5  CT ≦ α  N / Y

DISENGAGE CLUTCH QUICKLY  Q6

END

# Fig. 7 (PRIOR ART)

# Fig. 8 (PRIOR ART)